# EUROPEAN PATENT SPECIFICATION

(11) **EP 1 339 982 B1**
(45) Date of publication and mention of the grant of the patent: **02.11.2011**
(21) Application number: 01998735.3
(22) Date of filing: 03.12.2001
(51) Int. Cl.: F03B 13/18, F03B 17/06

(54) **METHOD AND DEVICE FOR THE UTILISATION OF WAVE ENERGY**
METHODE UND VORRICHTUNG ZUR VERWENDUNG VON WELLENENERGIE
PROCEDE ET DISPOSITIF D'UTILISATION DE L'ENERGIE DES VAGUES

(30) Priority: 01.12.2000 NL 1016766
(43) Date of publication of application: 03.09.2003
(73) Proprietor: Ecofys Investments B.V., 3072 AP Rotterdam (NL); Rossen, Eric Arthur, 2000 Fredriksberg (DK)
(72) Inventor: ROSSEN, Eric, Arthur, DK-2000 Fredriksberg (DK); SCHEIJGROND, Peter, Cornelis, NL-2806 JA Gouda (NL)
(74) Representative: Altenburg, Bernardus Stephanus Franciscus
(86) International application number: PCT/NL2001/000876
(87) International publication number: WO 2002/044558

(56) References cited:
- WO-A-01/48374
- DE-A- 2 948 060
- GB-A- 2 250 321
- US-A- 4 313 711
- US-A- 4 624 624
- US-A- 5 269 647
- US-A- 6 036 443

## Description

The present invention relates to a method and a device for the utilization of wave energy

as definet in the preambles of claims 1 and 3, respentively. Such a device is know from from US 4,313,711.

A great variety of such devices are known, some of which are located just below the surface of the sea.

It is the object of the present invention to provide a method and a device of the type mentioned in the preamble, which is substantially insensitive with respect to the direction from which the waves are coming. It is also an objective to provide a device that is relatively light, while nevertheless being well able to withstand the sometimes considerable stresses. 3

To this end the invention is defined by the independent claims 1 and 3. Favourable embodiments are the subject of the dependent claims.

Applicant has found that by using a Darrieus rotor, the changing currents around a wave can be used for the generation of energy.

The use of a Darrieus rotor for the generation of energy with the aid of hydropower is known for running water, but not for the utilization of wave energy.

According to a first important preferred embodiment, the device is provided both with a Well's rotor and with a Darrieus rotor and the axes of rotation coincide.

In this way the Darrieus rotor will start more easily if the rotor has been idle after a period of absence of (or sufficiently strong) waves. In addition, the different directions of current in and around waves are utilized more efficiently so that more wave energy can be utilized. Well's rotors are known in devices for the utilization of wave energy (see GB 2,250,321). There, an air chamber is provided at a (steep) rocky coast, closed off by the surface of the sea, and in a channel which is in communication with the atmosphere, a Well's rotor is provided. The movement of waves in the chamber provides a reciprocating air flow through the channel, causing the Well's rotor to rotate.

According to a very important preferred embodiment the turbine blades of the Well's rotor are with respect to the axis of rotation, distally connected with the blades of the Darrieus rotor.

In this way the blades of the Well's rotor are used as construction element for the blades of the Darrieus rotor. Instead of construction elements that increase friction without contributing to the generation of energy, this provides cross arms that contribute to the generation of energy. Preferably therefore, all the blades of the Darrieus rotor are connected with blades of the Well's rotor.

Although the device can be used to generate mechanical energy, for example, by means of driving shafts, or hydraulically or pneumatically, the device preferably comprises a generator for the generation of electricity.

Basically, such a body of water is a sea or an ocean, although a lake that may or may not be fresh water and on which wind causes waves to occur, is also suitable.

The axis of rotation is vertical.

In this way the device is able to make optimal use of the wave energy in the waves.

The device is preferably adjustable in height and is adjusted such that all the rotor blades are submerged under the water surface of the body of water.

This achieves not only that the device is positioned just beneath the water surface (where the wave energy is) allowing it to be adjusted to possible tidal action, but that in the event of storm, the device can be submerged deeper under the water surface so that it does not become damaged and is able to continue to generate energy.

The invention will be elucidated with reference to the following exemplary embodiment and the drawings, in which
Fig. 1 shows a device according to the invention comprising a Wells rotor and a Darrieus rotor;
Fig. 2 shows a cross-section through the device of Fig. 1 along line II-II;
Fig. 3 shows a detail of the device shown in Fig. 1, wherein a Well's rotor blade is at its end connected with a Darrieus rotor blade.
Fig. 4a-c shows three alternative embodiments of a combination of a Well's rotor and a Darrieus rotor;
Fig. 5 shows a floating device according to the invention; and
Fig. 6 shows an alternative device according to the invention in two positions.

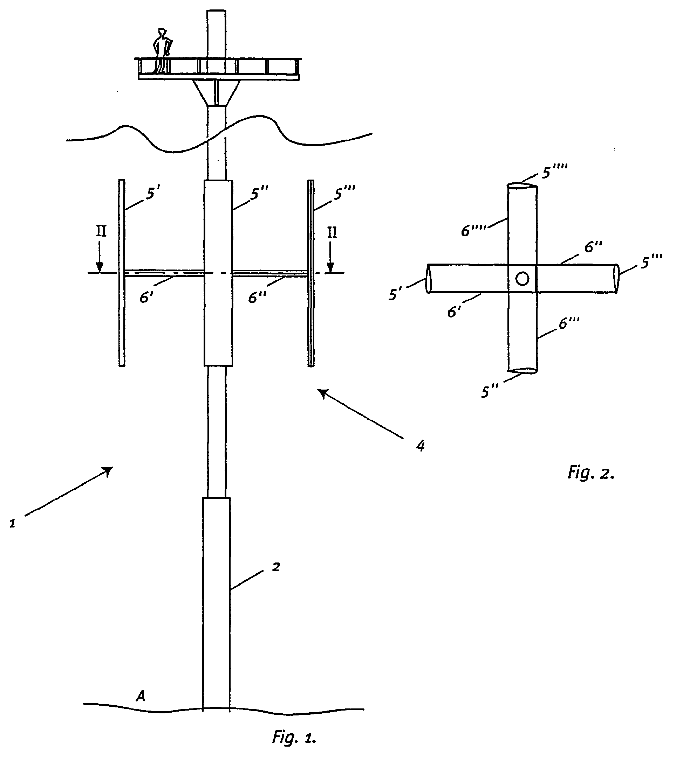

In Fig. 1 a device 1 is illustrated, which comprises a pole 2 mounted in the sea bed A along which, for example hydraulically, an assembly 4 of rotor blades can be moved. The assembly 4 is rotatable about an axis of rotation which coincides with the centre line through the pole 2. The assembly 4 comprises four Darrieus rotor blades 5 (5', 5" and 5 " ' are visible; 5 " " is behind the pole) and four Well's rotor blades 6 (6' and 6" are visible, 6"' and 6"" are not visible). In the illustrated embodiment, the Well's rotor blades 6 are positioned horizontally, but this is not a prerequisite. The Wells rotor blades 6 may also be positioned at an angle, either upward or downward. In the embodiment shown, the Darrieus rotor blades 5 are placed perpendicularly to the sea bed A, but this is not a prerequisite. The Darrieus rotor blades 5 may also be positioned at an angle with the axis of rotation such as to form a conical surface of revolution. In order to reduce peak loads on the Darrieus rotor blades 5, a pair of Darrieus rotor blades 5 connected via Well's rotor blades 6 may be rotated somewhat with respect to the centre line of the Wells rotor blades 6. Fig. 1 also shows a maintenance platform, which is of no importance with respect to the invention itself.

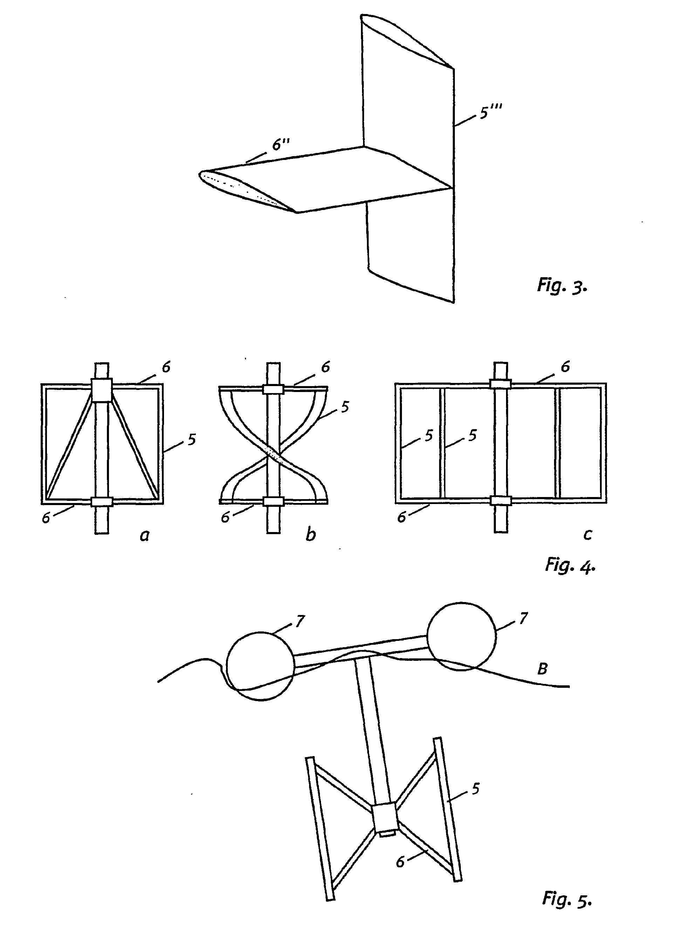

Fig. 2 shows a cross-sectional line along II-II in Fig. 1. One can see the Wells rotor blades 6'-6"" as well as a cross section through the Darrieus rotor blades 5'-5"". Fig. 2 shows that the assembly 4 rotates anticlockwise. At the front the Wells rotor blades 6 are thicker than at the rear (Fig. 3). Within the scope of the present invention it is also possible for the Darrieus rotor blades 5 to be connected by means of an arm that has a wing profile either on top or underneath, in which case it is preferred that at least one arm having a wing profile on top as well as at least one arm having a wing profile underneath be present (not shown).-However, for an optimal energy production it is preferred for each arm to have a wing profile both on top and underneath.

In order to obtain a strong construction, the Darrieus rotor blades 5 and the Wells rotor blades 6 may form a frame in the form of, for example, a rectangle (Fig. 4a).

To avoid peak loads, the Darrieus rotor blades may also be spiral-shaped (the axis of rotation forming a virtual centre line. (See Fig. 4b).

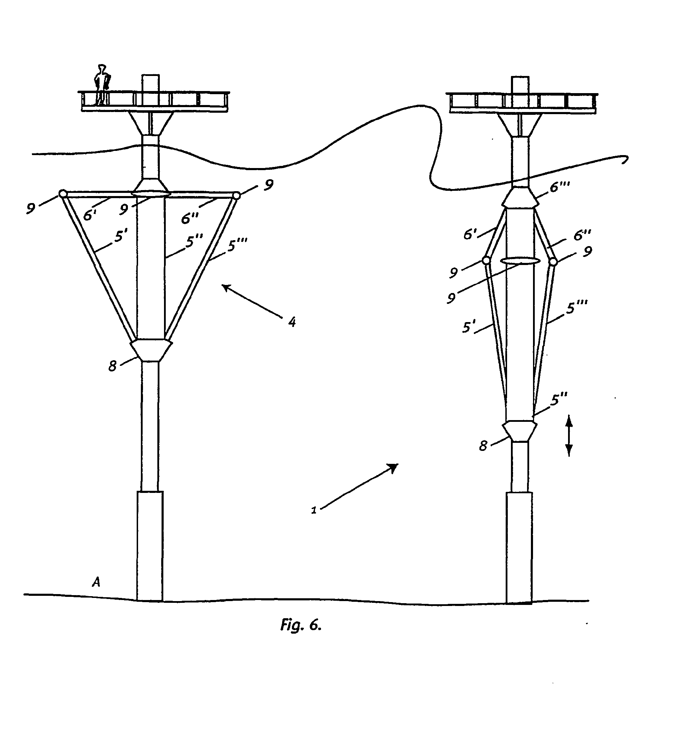

A preferred embodiment is shown in Fig. 6. At their tops, the two devices shown there comprise blades 6 of the Well's rotor, which are connected with blades 5 of the Darrieus rotor. At the lower side of the device the blades 5 of the Darrieus rotor taper towards each other. There they may be connected with one another or, as illustrated, be connected with a vertically movable bearing ring 8. This provides a strong, and for the generation of energy very efficient construction (Fig. 6 at the left). Advantageously the blades of the wells rotor and the Darrieus rotor are, as illustrated, pivotingly connected by means of hinges 9, and near the axis of rotation the blades 6 of the Wells rotor may be moved down but preferably up. In the embodiment shown, the bearing ring 8 can be moved down (Fig. 6 at the right). Such a construction allows all the blades 5, 6, for example, in the event of floating ice or very stormy weather to be brought into a substantially longitudinal form. Although in this position the device is long, it takes up little space. Moreover, in this position the arm (which in the illustrated position of the device is equal to the length of the blades), and consequently the moment that can be exerted on the device, is very small. In this way, for example, extreme beating of the waves can cause less damage. Conceivably the device is still able to produce energy even when partly folded in stormy weather. This pivoting construction is also convenient for transport and installation of the device.

Although the invention has been described with reference to some specific embodiments, it will be obvious to the person skilled in the art that within the scope of the appended claims many variants are possible. For example, the number of rotor blades 5, 6 may be varied. With a frame construction optionally twice as many Darrieus rotor blades may be provided as Wells rotor blades (Fig. 4c). The Wells rotor blades may also be positioned at a slant (Fig. 4a), resulting in a frame that is able to absorb more mechanical stress. To conveniently maintain the device near the surface of the sea B, a device attached to one or more floating bodies 7 may be used. When a pole is used, a mast for a wind mill installed at sea may be used. The direction of rotation may be reversed (by rotating the blades 5, 6 about their longitudinal axis) in order to dispose of any dirt.

## Claims

1. A method for the utilization. of wave energy wherein a device comprising a Well's rotor with a vertical-axis of rotation is placed into a body of water in which waves occur naturally, which rotor is equipped to be driven by waves while being submerged in a body of water, the device comprising a generator for the generation of electricity and is used to generate electricity, **characterized in that** the device comprises a combination of the Well's rotor and a Darrieus rotor and the axis of rotation of the Well's rotor coincides with the axis of rotation of the Darrieus rotor.

2. The method according to claim 1, **characterized in that** the device is adjustable in height and is adjusted such that all the rotor blades are submerged under the water surface of the body of water.

3. A device for the utilization of wave energy suitable for use in a sea or ocean comprising a Well's rotor with a vertical axis of rotation, the device further comprising a generator for the generation of electricity, **characterized in that** the device comprises a combination of a Darrieus rotor and the said Well's rotor, the axis of rotation of the Well's rotor coinciding with the axis of rotation of the Darrieus rotor, which rotors are equipped to be driven by waves while being submerged in a body of water.

4. The device according to claim 3, **characterized in that** the turbine blades of the Well's rotor are with respect to the axis of rotation, distally connected with the blades of the Darrieus rotor.

5. The device according to claim 3 or 4, **charaeterized in that** the device comprises two Well's rotors, wherein blades of both Well's rotors are distally connected with blades of the Darrieus rotor.

6. The device according to one of the preceding claims 3 to 5, **characterized in that** all the blades of the Darrieus rotor are connected with blades of the Well's rotor.

## Patentansprüche

1. Verfahren zur Nutzung von Wellenenergie, wobei eine in einem Gewässer mit natürlich auftretenden Wellen angeordnete Vorrichtung
einen Wells-Rotor mit einer vertikalen Rotationsachse, dessen Rotor ausgerüstet ist, um durch Wellen angetrieben zu werden, während er in einem Gewässer eingetaucht ist; und
einen Generator zur Stromerzeugung aufweist, wobei die Vorrichtung zur Stromerzeugung verwendet wird, **dadurch gekennzeichnet, dass**
die Vorrichtung eine Kombination aus dem Wells-Rotor und einem Darrieus-Rotor aufweist, wobei die Rotationsachse des Wells-Rotors mit der Rotationsachse des Darrieus-Rotors zusammenfällt.

2. Verfahren nach Anspruch 1, **dadurch gekennzeichnet, dass** die Vorrichtung höhenverstellbar ist, wobei sie so eingestellt ist, dass alle Rotorblätter unter einer Wasseroberfläche des Gewässers eingetaucht sind.

3. Vorrichtung zur Nutzung von Wellenenergie, die zur Verwendung in einem Meer oder einem Ozean geeignet ist, wobei die Vorrichtung
einen Wells-Rotor mit einer vertikalen Rotationsachse; und
einen Generator zur Stromerzeugung aufweist, **dadurch gekennzeichnet, dass** die Vorrichtung eine Kombination aus einem Darrieus-Rotor und dem Wells-Rotor aufweist, wobei
die Rotationsachse des Wells-Rotors mit der Rotationsachse des Darrieus-Rotors zusammenfällt; und
die Rotoren ausgerüstet sind, um durch Wellen angetrieben zu werden, während sie in einem Gewässer eingetaucht sind.

4. Vorrichtung nach Anspruch 3, **dadurch gekennzeichnet, dass** Turbinenblätter des Wells-Rotors bzgl. der Rotationsachse distal mit Blättern des Darrieus-Rotors verbunden sind.

5. Vorrichtung nach Anspruch 3 oder 4, **dadurch gekennzeichnet, dass** Vorrichtung zwei Wells-Rotoren aufweist, wobei Blätter beider Wells-Rotoren distal mit den Blättern des Darrieus-Rotors verbunden sind.

6. Vorrichtung nach einem der vorangehenden Ansprüche 3 bis 5, **dadurch gekennzeichnet, dass** alle Blätter des Darrieus-Rotors mit den Blättern des Wells-Rotors verbunden sind.

## Revendications

1. Procédé pour l'utilisation de l'énergie des vagues selon lequel un dispositif comportant un rotor de Well avec un axe vertical de rotation est placé dans une étendue d'eau dans laquelle des vagues se produisent naturellement, lequel rotor est équipé afin d'être entraîné par des vagues tout en étant submergé dans une étendue d'eau, le dispositif comportant un générateur pour la génération d'électricité et étant utilisé pour produire de l'électricité, **caractérisé en ce que** le dispositif comporte une combinaison du rotor de Well et d'un rotor de Darrieus et l'axe de rotation du rotor de Well coïncide avec l'axe de rotation du rotor de Darrieus.

2. Procédé selon la revendication 1, **caractérisé en ce que** le dispositif est réglable en hauteur et est ajusté de telle sorte que toutes les pales de rotor sont submergées sous la surface de l'eau de l'étendue d'eau.

3. Dispositif pour l'utilisation de l'énergie des vagues adapté à une utilisation en mer ou dans un océan comportant un rotor de Well avec un axe de rotation vertical, le dispositif comportant en outre un générateur pour la génération d'électricité, **caractérisé en ce que** le dispositif comporte une combinaison d'un rotor de Darrieus et dudit rotor de Well, l'axe de rotation du rotor de Well coïncidant avec l'axe de rotation du rotor de Darrieus, lesquels rotors sont équipés afin d'être entraîné par des vagues tout en étant submergés dans une étendue d'eau.

4. Dispositif selon la revendication 3, **caractérisé en ce que** les pales de turbine du rotor de Well sont, par rapport à l'axe de rotation, reliées d'une manière distale aux pales du rotor de Darrieus.

5. Dispositif selon la revendication 3 ou 4, **caractérisé en ce que** le dispositif comporte deux rotors de Well, des pales des deux rotors de Well étant reliées d'une manière distale aux pales du rotor de Darrieus.

6. Dispositif selon l'une des revendications précédentes 3 à 5, **caractérisé en ce que** toutes les pales du rotor de Darrieus sont reliées aux pales du rotor de Well.
